# EUROPEAN PATENT APPLICATION

(11) **EP 4 660 852 A1**
(43) Date of publication of application: **10.12.2025**
(21) Application number: 24275067.7
(22) Date of filing: 07.06.2024
(51) Int. Cl.: G06F 18/2433, G06N 3/09

(54) **METHODS AND SYSTEMS FOR ANOMALY DETECTION**

(71) Applicant: Helsing GmbH, 81671 Munich (DE)
(72) Inventor: FAITH, Joe, 81671 Munich (DE)
(74) Representative: Haseltine Lake Kempner LLP

(57) **Abstract**

There is provided a computer-implemented method of training an anomaly detection model for detecting anomalies in data associated with the behaviour of land, sea, air and/or space domain assets, comprising: selecting a training dataset for training the anomaly detection model by outlier exposure, the training dataset comprising data associated with the behaviour of assets in at least one of land, sea, air and/or space domain, the training dataset comprising normal data associated with normal behaviour and anomalous data associated with anomalous behaviour; encoding the training dataset within the anomaly detection model to create an encoded training dataset comprising encoded normal data and encoded anomalous data; determining, based on the encoded training dataset, a hypersphere defining a threshold to distinguish the encoded normal data from the encoded anomalous data.

## Description

### Field of the Invention

The present invention relates to anomaly detection, and particularly to anomaly detection in the field of Intelligence, Surveillance and Reconnaissance (ISR) data and associated systems.

### Background of the Invention

Anomaly detection is a commonly used approach for detecting malicious threats and malicious actors in a range of applications, including in money laundering, fraud detection, network intruder detection, and ISR. In digital and data contexts, the core concept is that an anomaly detection algorithm or process monitors a particular context-relevant activity - such as financial account transactions, data packet movements, or physical vessel movements - and identifies behaviours that are considered unusual or anomalous in some way. In the broadest conceptual framing, most 'normal' activity is assumed to be benign, and the anomaly detection algorithm may have been trained or informed of this activity in some way, and so anomalous activity can be caught by the anomaly detection process and will be considered malign.

Whilst the detection of anomalies is important in many different domains, in the specific case of contexts such as ISR and military, the fast and accurate detection of anomalies is critical to the avoidance of adverse and dangerous situations, damage to physical assets and even loss of life. In the ISR context as above, the 'normal' activity will constitute the normal `patterns of life' in the particular ISR domain, and behaviours indicative of a threat will be anomalous with reference to these. The same approach can be applied in many different ISR domains, such as maritime ISR, land ISR, anti-submarine warfare, electronic warfare and radar.

However, anomaly detection in the ISR field suffers from a number of distinct and significant problems. For instance, a key problem is that there are typically very few examples of previous threats and anomalous actions from which to learn. This makes building and training accurate anomaly detection systems difficult. Further, the type of anomalous threat is always changing and evolving, and so the challenge requires looking for so-called `unknown unknowns' - new types of anomaly that might represent threats that have not previously been encountered and are unlike those that have been encountered. Partly as a consequence of difficulties, existing anomaly detection systems in the field of ISR are often very noisy or low precision, producing many false positive detections.

A number of anomaly detection approaches and algorithms have been tried, including for instance rules-based systems, supervised systems and unsupervised systems. However, each of these suffers from distinct disadvantages and compromises. In a rules-based approach, explicit rules are defined to detect known classes of anomalous or threat behaviours, such as large cash transactions or vessels outside of regular shipping lanes. This results in relatively high precision and explainable results, but comes at the distinct disadvantage that the system can only detect so-called `known unknowns' for which a rule is already defined. In a supervised approach, examples of each type of anomalous or threat behaviour are used to train a machine learning classifier, where the trained classifier can then be applied to the detection of anomalies in future cases. This results in higher precision than the rules-based approach, however comes at the distinct disadvantage that it requires large to very large volumes of training data with labelled examples of anomalous behaviour. As noted above, this is rarely if ever available in the ISR context, again substantially limiting the system to so-called `known unknowns'. Further, training in this manner can result in over-constraint, where the machine learning classifier effectively begins to assume future anomalous data will share similarities with historical anomalous data. In an unsupervised approach there is no labelled data, and a machine learning model may be trained to determine how 'typical' an example behaviour is, for example using the reconstruction error of an autoencoder. This has the advantage that previously unknown threats, so-called `unknown unknowns', are theoretically able to be identified, but in practice comes at the cost of very low precision: any benign activity that deviates statistically from the normal will be considered anomalous.

Accordingly, there is a desire for methods and systems to address the above-mentioned deficiencies in anomaly detection. There is a desire to detect anomalies in a fast, reliable, accurate and secure manner, particularly in the field of ISR data.

Certain aspects of the present disclosure and their embodiments may provide solutions to these or other challenges.

### Statement of the Invention

Aspects of the invention are defined by the accompanying claims. Preferred optional features are defined in the dependent claims.

According to an aspect of the present application, there is provided a computer-implemented method of training an anomaly detection model for detecting anomalies in data associated with the behaviour of land, sea, air and/or space domain assets, comprising: selecting a training dataset for training the anomaly detection model by outlier exposure, the training dataset comprising data associated with the behaviour of assets in at least one of land, sea, air and/or space domain, the training dataset comprising normal data associated with normal behaviour and anomalous data associated with anomalous behaviour; encoding the training dataset within the anomaly detection model to create an encoded training dataset comprising encoded normal data and encoded anomalous data; determining, based on the encoded training dataset, a hypersphere defining a threshold to distinguish the encoded normal data from the encoded anomalous data.

The encoding the training dataset may comprise: applying a mapping function to obtain a multidimensional representation of the training dataset in a multidimensional representation space, the mapping function converting the normal data into the encoded normal data within the multidimensional representation space and converting the anomalous data into the encoded anomalous data in the multidimensional representation space; and determining the hypersphere comprises determining a hypersphere defined in the multidimensional representation space that contains at least a predetermined amount, and preferably all, of the encoded normal data, and wherein the threshold is a radius of the hypersphere.

Adjusting the mapping function until the multidimensional representation may be such that: the radius of the hypersphere, defined in the multidimensional representation space to contain the at least a predetermined amount, and preferably all, all of the encoded normal data, is minimised; and/or an average distance of the encoded anomalous data from the centre of the hypersphere is maximised.

The mapping function may be a linear mapping function.

The mapping function may be, or may be implemented by, a neural network, and the adjusting of the mapping function may comprise adjusting at least one network weight of the neural network.

Before encoding the training dataset, the training dataset may first be processed by a foundation model neural network which performs embedding of the training dataset in a second multidimensional representation space to create an embedded training dataset, such that the normal data before encoding is embedded normal data and the anomalous data before encoding is embedded anomalous data. The foundation model neural network may be trained using datasets from the at least one land, sea, air and/or space domain, and wherein the embedding is preferably configured to capture relationships in the training dataset.

The datasets used to train the foundation model neural network may include data relating to behaviour of assets as well as data unrelated to behaviour of assets.

The foundation model neural network may be selected based on a particular domain and/or asset of interest, and may be trained on datasets relating to the domain and/or asset of interest. The foundation model neural network may be selected based on the format of data.

According to an aspect, there is provided a computer-implemented method of performing, using the anomaly detection model trained in accordance with any aspect or embodiment of the present application, anomaly detection in data associated with the behaviour of land, sea, air and/or space domain assets, comprising: selecting target data comprising data associated with the behaviour of at least one asset in at least one of land, sea, air and/or space domain; encoding the target data using the anomaly detection model to create encoded target data; classifying the target data, comprising comparing the encoded target data to the hypersphere defining the threshold. If the encoded target data is less than or equal to the threshold, the target data is determined to be associated with normal behaviour; and if the encoded target data exceeds the threshold, the target data is determined to be associated with anomalous behaviour.

The encoding the target dataset may comprise applying a mapping function in accordance with any other aspect or embodiment to obtain a multidimensional representation of the target data in the multidimensional representation space, the mapping function converting the target data into the encoded target data within the multidimensional representation space and converting the anomalous data into the encoded anomalous data in the multidimensional representation space; and the threshold is the radius of the hypersphere defined in the multidimensional representation space.

The classifying the target data may comprise: determining a distance of the encoded target data from the centre of the hypersphere; comparing the distance of the encoded target data from the centre of the hypersphere. If the distance is less than or equal to the radius, the target data is determined to be associated with normal behaviour; and if the distance exceeds the radius, the target data is determined to be associated with anomalous behaviour.

Before encoding the training dataset using the anomaly detection model, the target dataset may first be processed by a foundation model neural network from any other aspect or embodiment, such that the normal data input into the mapping function is embedded normal data and the anomalous data input into the mapping function is embedded anomalous data.

If the determination of the target data as either anomalous or normal is considered incorrect, for instance when reviewed by a user, the determination may be corrected and the target data with the correct determination may be included in a training dataset to further train the anomaly detection model.

The target data may be derived from sensor data received from physical sensors.

At least some of the training dataset may be synthetic, and in particular wherein at least some of the anomalous data is synthetic.

The data associated with the behaviour of land, sea, air and/or space domain assets may be intelligence, surveillance and reconnaissance (ISR) data, and the assets may be military assets.

The training dataset for training the anomaly detection model by outlier exposure may comprise a relatively small amount of anomalous data as compared to normal data.

According to an aspect there is provided a computer readable medium having stored thereon computer executable instructions to cause a computer system to perform a method of training an anomaly detection model as described in any aspect or embodiment of the present application, for detecting anomalies in data associated with the behaviour of land, sea, air and/or space domain assets.

According to an aspect there is provided a computer readable medium having stored thereon computer executable instructions to cause a computer system to perform a method of performing anomaly detection as described in any aspect or embodiment of the present application, in data associated with the behaviour of land, sea, air and/or space domain assets.

According to an aspect there is provided an information processing apparatus comprising a memory and a processor connected to the memory, wherein the processor is configured to perform a method of training an anomaly detection model as described in any aspect or embodiment of the present application, for detecting anomalies in data associated with the behaviour of land, sea, air and/or space domain assets.

According to an aspect there is provided an information processing apparatus comprising a memory and a processor connected to the memory, wherein the processor is configured to perform a method of performing anomaly detection as described in any aspect or embodiment of the present application, in data associated with the behaviour of land, sea, air and/or space domain assets.

In any aspect or embodiment of the present application, the assets may for instance be manned or unmanned vehicles in any of land, sea, air, and/or space domains, human individuals in the land domain, and/or may in particular be drones or unmanned aerial vehicles in the air and or space domains and/or may be sea vessels such as ships in the sea domain.

In any aspect or embodiment of the present application, the output of the classification from the anomaly detection model may trigger some form of alert, for instance in either visual, audible, or any other appropriate format. In such instances the output of the classification of the anomaly detection model may cause a subsequent real-world action to be taken. For example, if the behaviour of a particular asset is determined to be anomalous, a connected system may be automatically instructed to increase the frequency of physical sensor observations of said particular asset, to begin tracking the asset, instruct a communication system to issue a communication, transmit the data to a remote system or database, or to search for further sources of information about said asset. For instance, when the asset is an unmanned aerial vehicle or a ship or boat, the output of the anomaly detection model being the classification of anomalous may cause for instance an alert to be output by a system to a user, and/or may cause a system to automatically to increase the frequency of physical sensor observations of said unmanned aerial vehicle or a ship or boat and/or to begin tracking it in a more dedicated fashion.

In any aspect, the determining of the threshold, and thereby the determining of the hypersphere, may be performed by a classifier machine learning model. The classifier machine learning model may be trained based on the encoded normal data and the encoded anomalous data to distinguish between the encoded normal data and the encoded anomalous data.

Some aspects of the present application may advantageously provide an improved manner of training an anomaly detection model for detecting anomalies in data associated with the behaviour of land, sea, air and/or space domain assets, capable of providing fast, efficient and accurate training of an anomaly detection model.

Some aspects of the present application may advantageously provide an improved anomaly detection model for detecting anomalies in data associated with the behaviour of land, sea, air and/or space domain assets, capable of accurately, quickly, efficiently and robustly determining anomalies in such data. In particular, some aspects of the present application may provide an anomaly detection model capable of detecting anomalies in data associated with the behaviour of land, sea, air and/or space domain assets with improved accuracy in both precision and recall, where for instance 'precision' relates to the fraction of detected anomalies that are actually true anomalies, while 'recall' measures the fraction of true anomalies that are detected by the mode.

Further, some aspects of the present application may advantageously provide an improved anomaly detection model for detecting anomalies in data associated with the behaviour of land, sea, air and/or space domain assets - and an improved training method thereof - despite having either a small number or no observed examples of data associated with anomalous behaviour from which to learn.

Some aspects of the present application have identified and employed techniques including outlier exposure in a manner that may be particularly advantageous to the types, context, breadth and complexity of data found in datasets associated with the behaviour of such assets in the land, sea, air and/or space domains, and particularly in the context of ISR and/or military data.

Some aspects of the present application may advantageously provide an anomaly detector that avoids becoming overtrained into effectively assuming similarity between anomalous examples in a manner that constrains it to only being able to detect so called `known unknowns'.

Some aspects of the present application may provide an anomaly detection model advantageously capable of a particularly high level of accuracy of anomaly detection on target datasets.

Some aspects of the present application may provide an anomaly detection model with an advantageously high level of generalized accuracy, able to accurately detect anomalies of so called `unknown unknown' varieties outside the distribution of the training dataset.

Some aspects of the present application may provide an improved method of training an anomaly detection model, capable of providing an improved efficiency and accuracy training of an anomaly detection model, for instance one advantageously capable of learning on the datasets having small numbers of known examples of anomalous data, such as ISR data contexts, and ones wherein the types and forms of data and domain and asset of interest come in a wide variety of different forms.

Various aspects and embodiments of the invention are described without limitation below, with reference to the figures.

### Brief Description of the Drawings

There now follows, by way of example only, a detailed description of preferred embodiments of the present invention, with reference to the figures identified below.
**Figure 1** is a diagram illustrating a method;
**Figure 2** is a diagram illustrating a data mapping;
**Figure 3** is a diagram illustrating a method;
**Figure 4** illustrates a graph;
**Figure 5** is a diagram illustrating an apparatus..

### Detailed Description

In the following description, functionally similar parts carry the same reference numerals between figures. Aspects and embodiments of the invention are now described, without limitation and by way of example only, with reference to the accompanying drawings.

Some aspects of the present application may advantageously provide an improved manner of training an anomaly detection model for detecting anomalies in data associated with the behaviour of land, sea, air and/or space domain assets, capable of providing fast, efficient and accurate training of an anomaly detection model.

Some aspects of the present application may advantageously provide an improved anomaly detection model for detecting anomalies in data associated with the behaviour of land, sea, air and/or space domain assets, capable of accurately, quickly, efficiently and robustly determining anomalies in such data. In particular, some aspects of the present application may provide an anomaly detection model capable of detecting anomalies in data associated with the behaviour of land, sea, air and/or space domain assets with improved accuracy in both precision and recall, where for instance 'precision' relates to the fraction of detected anomalies that are actually true anomalies, while 'recall' measures the fraction of true anomalies that are detected by the mode.

Further, some aspects of the present application may advantageously provide an improved anomaly detection model for detecting anomalies in data associated with the behaviour of land, sea, air and/or space domain assets - and an improved training method thereof - despite having either a small number or no observed examples of data associated with anomalous behaviour from which to learn.

In particular, aspects of the present application are concerned with detecting anomalies in the behaviour of assets in a number of different domains, in particular the land, sea, air and/or space domains. The type of data may take many different forms, and may for instance be ISR data and/or military data. The assets in any of these domains may also take many different forms, but for instance refers to any object of interest or location of interest, such as an object or location of interest in the context of ISR data which may relate to a potential threat. For instance, specific examples of assets may be vehicles, sea vessels, drones, buildings, locations, regions, persons, transmission and receiver equipment, hardware, weaponry, military assets etc. The behaviour associated with these assets may also take many forms, and for instance includes acoustic/electromagnetic emissions, movements, transmissions, trajectories, velocities, operations, actions etc. The physical sensors used to collect data associated with the behaviour of these assets may similarly take an appropriately large number of forms, including for instance radar systems, GPS systems, electromagnetic (EM) wave detection and monitoring systems, satellite imaging systems, photographic systems, microphones, hydrophones, sonar, laser, seismographic, telecommunications systems etc. The data used in aspects of the present application - both the training data and the target data - may come directly from physical sensors, or may for instance come from a database, but regardless may ultimately be derived from physical sensor data. Given the above examples, the skilled person will be aware of a number of different alternatives which are envisaged by the present application.

In a specific example, the assets may for instance be manned or unmanned vehicles in any of land, sea, air, and/or space domains, human individuals in the land domain, and/or may in particular be drones or unmanned aerial vehicles in the air and or space domains and/or may be sea vessels such as ships in the sea domain.

By way of a small number of specific examples of combinations of different domains, sensors, assets, behaviours and types of data, at least the following representative examples are envisaged:
- Sea ISR data (e.g. in at least the sea domain), such as maritime ISR data, associated with behaviour concerning patterns of activity, such as a vessel usage of a location transponder, the nationalities of vessels visiting particular ports, or fishing vessels fishing in particular locations.
- Land ISR data (e.g. in at least the land domain) associated with behaviour concerning patterns of activity such as vehicle traffic in a new area, such as construction traffic, or significant changes in the pattern of ground of humans and buildings and vehicles at a particular site or region.
- Submarine data (e.g. in at least the sea domain), such as anti-submarine warfare data, associated with behaviour related to transient sounds indicative of the presence of underwater vessels and their operations, such as the filling of a submarine ballast tank, or an increase in motor noise and vessel speed.
- Electronic data (e.g. in any domain), such as electronic warfare data, associated with behaviour related to EM waveforms or pulse streams from radar hardware.
- Radar data (e.g. in any domain) associated with behaviour relating to patterns of energy in in-phase/quadrant-phase (IQ) or depolarization radio (DR) data that may be indicative of the presence of an asset with a particular radar cross-section (RCS).

Accordingly, as demonstrated above, aspects of the present application are concerned with a wide range of different types of data format. By way of a small number of specific examples, at least the following representative examples are envisaged:
- Sea or Land ISR data may come in the format of, for instance, tables of observation data, where each row may contain the time, position, velocity, type and other characteristics of the detected asset.
- Submarine data may come in the format of, for instance, acoustic data from passive sonar installations and arrays.
- Electronic data may come in the format of, for instance, IQ data or spectrograms or sequences of pulses representing the EM information captured by a receiver.
- Radar data may come in the format of, for instance, IQ or DR data of the EM information captured by the receiver.

Accordingly, aspects of the present application are concerned with the behaviour of a wide variety of assets in a wide variety of domains.

A common problem across the data concerned - in particular in ISR and/or military data - and in the field of anomaly detection in general is the lack of many or sometimes any examples of data considered anomalous. For instance, by definition, the majority of the behaviour of assets is considered normal. Hence as explained in the Background section, the approach to training anomaly detection models is usually that of unsupervised training, such that the anomaly detection model may still be able to determine so-called `unknown unknowns', however with the disadvantage of relatively low accuracy as almost nothing is known about the form future anomalous behaviour might take. Similarly, as previously explained, in alternative scenarios, training anomaly detection models using fully supervised approaches leads to over-constraint as the anomaly detection model only becomes able to identify anomalous behaviour that is similar to behaviour it has seen before, so called `known unknowns'. These and the state-of-the-art approaches represent distinct disadvantageous failings.

Indeed, by way of example of the complexity of determining the wide range of different behaviours which may constitute anomalous behaviour, a small number of specific representative examples envisaged by aspects of the present application are:
- Sea ISR: patterns of activity that seem unusual or non-standard, such as a vessel turning off a location transponder before changing course, a vessel of one nationality visiting the military port of another country, or a fishing vessel spending extended periods of time outside regular fishing areas.
- Land ISR: patterns of activity such as an increase in a particular class of traffic in a new area, such as construction traffic close to a previously quiet border area, or significant changes in the pattern of ground activity at a military installation.
- Anti-Submarine Warfare: detection of transient sounds indicative of the presence of an underwater threat, such as the filling of a submarine ballast tank, transient mechanical sounds originating from a submarine, or the placing of an explosive device on a piece of critical underwater infrastructure.
- Electronic Warfare: detection of EM waveforms or pulse streams that are due to the presence of a previously unknown waveform from a military radar.
- Radar: detection of patterns of energy in IQ or DR data that may be indicative of the presence of a novel threat with a small RCS that may not be detected by existing radar detection and classification processes.

Accordingly, aspects of the present application are not limited with regard to what might be considered normal or anomalous for any particular asset or domain, as a large variety of different examples for each asset and domain are envisaged. For instance, for any particular asset or domain, a colloquial framing of what might be considered normal behaviour may be stated as behaviour, occurrences and activity that constitutes normal `patterns of life' within that domain and/or for that asset.

Hence aspects of the present application may seek to address issues of anomaly detection in the disparate and complicated datasets associated with the behaviour of such assets in the land, sea, air and/or space domains. Some aspects of the present application may be capable of accurately detecting anomalies across these disparate and complicated datasets.

In particular, aspects of the present application employ the technique of outlier exposure for training anomaly detection models as applied to the datasets associated with the behaviour of such assets in the land, sea, air and/or space domain, and further in particular within the context of hypersphere anomaly detection. Aspects of the present application have identified and employed these techniques in a manner that is particularly advantageous to the types, context, breadth and complexity of data found in datasets associated with the behaviour of such assets in the land, sea, air and/or space domains, and particularly in the context of ISR and/or military data. In particular, these contexts are extreme examples of both necessitating a particularly high degree of accuracy in detection - as anomalies in these context may relate to threats and danger, and where decisions made on the basis of anomaly detection are important and could have potentially severe consequences - whilst also suffering from very low numbers of examples of previous anomalous behaviour from which to learn. Further, the task of identifying so called `unknown unknown' anomalies - such as new threats not previously encountered - is a particularly complex, burdensome and prone to error. Accordingly, existing anomaly detection methods systems in this context are disadvantageously noisy, and/or low precision, producing many false positive detections. Aspects of the present application seek to overcome this.

Within the context of aspects of the present application, outlier exposure is a method of training an anomaly detector by exposing it to a relatively small number of known anomalous datapoints (sometimes referred to as an 'out of distribution dataset') as compared to normal datapoints. A particular advantage is that the anomaly detector does not become overtrained into effectively assuming similarity between anomalous examples in a manner that constrains it to only being able to detect so called `known unknowns'.

Advantageously, this approach is particularly effective in the context of datasets associated with the behaviour of assets in the land, sea, air and/or space domains in the context of ISR and/or military data. In these contexts there exists only a small number if any examples of anomalous data - for example of threats detected in the past through conventional means or artificially created examples generated to represent hypothesised threats - and the aim of anomaly detection in this context is to search for `unknown unknowns'. By contrast, for ISR data in particular, there is a large quantity of data in each particular domain and/or for particular assets which may constitute normal behavior. For instance, in the context of the sea domain there is a very large amount of publicly available data on assets such as ships, tankers, container ships etc. as published by the Automatic Identification System (AIS), where the data includes timestamped location, velocity, heading and vessel type information. The vast majority of this data by definition relates to behaviour considered normal.

As will be explained further below, the anomaly detector as used in aspects of the present application is trained using a hypersphere approach, wherein an abstract hypersphere is applied to encoded examples of normal and anomalous data to determine a threshold between the normal and anomalous data which can then be used in anomaly detection on real target data. One advantage of approaches such as this in accordance with aspects of the present application as compared to conventional supervised anomaly detection techniques that use examples of anomalous behaviours to train a model, is that it advantageously assumes no similarity between anomalous examples and so robustly generalises to detecting `unknown unknown' anomalies.

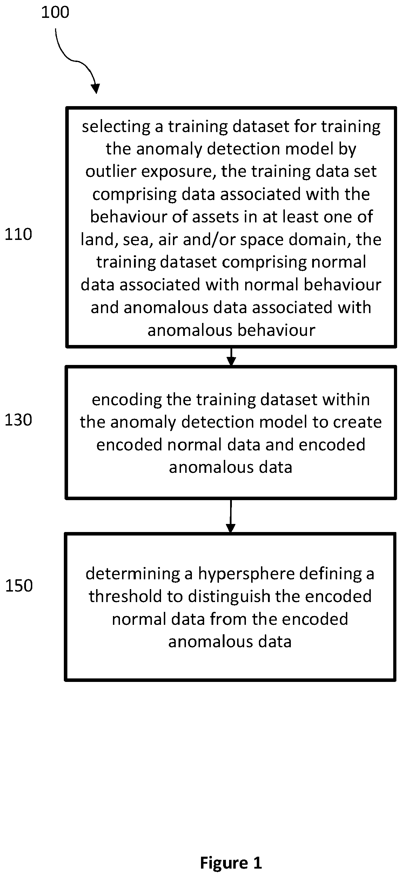

**Figure 1** shows a flow chart of a computer-implemented method 100 of training an anomaly detection model for detecting anomalies in data associated with the behaviour of land, sea, air and/or space domain assets, according to an aspect of the present application.

In step 110, a training dataset is selected, where the training dataset is suitable for or configured to train the anomaly detection model using the process of outlier exposure. In particular, the training data set comprises data associated with the behaviour of assets in at least one of land, sea, air and/or space domain, the training dataset comprising normal data associated with normal behaviour and anomalous data associated with anomalous behaviour.

In particular, in a specific embodiment the training dataset is selected and created in a manner that makes it suitable for training the anomaly detector using outlier exposure. In particular, the training set includes data associated with both normal behaviour and also anomalous behaviour, including implicitly or explicitly labelled (e.g. known) examples of normal data associated with normal behaviour and implicitly or explicitly (e.g. known) examples of anomalous data associated with anomalous behaviour. Hence the normal and anomalous data has been identified in some manner - e.g. by human identification - as relating to behaviour that is considered either normal or anomalous within the context of at least one of: that particular asset, and/or that particular at least one domain of land, sea, air and space.

Further still, in a specific embodiment, to be particularly suited to training by outlier exposure, the training dataset for training the anomaly detection model by outlier exposure comprises a relatively small amount of anomalous data as compared to normal data. For instance, as outlined above, in the context of ISR data in particular, there is a large and even very large quantity of data in each particular domain and/or for particular assets which may constitute normal behavior. By contrast, there may only be a small or very small (e.g. a few) examples of known anomalous data relating to behaviour previously identified to have been anomalous. Further still, it is noted that in practice the training dataset may also include normal data, i.e. data labelled as normal, which may be inaccurately labelled as normal and in fact relates to behaviour considered anomalous. This is not of concern in aspects of the present application as it is considered that any such inaccurate data will be far outweighed by accurate normal data.

Further still, for certain assets and/or for certain domains, there may be no known examples of anomalous data relating to anomalous behaviour. In these circumstances, in a specific embodiment, at least some of the training dataset is synthetic, and in particular at least some of the anomalous data is synthetic (i.e. fake data created to represent behavior considered anomalous).

As previously outlined, the training dataset may be from direct physical sensor data, or may be from a database comprising historical data derived from physical sensor data.

In step 130, the training dataset is encoded within and using an aspect of the anomaly detection model to create an encoded training dataset comprising encoded normal data and encoded anomalous data.

Accordingly, in aspects of the present application, the anomaly detection model processes the training dataset to encode the training dataset. As is conventional, it may be considered that as such the normal data and the anomalous data are thereby encoded, where the encoding can be considered to be with reference to an abstract encoding representation space.

For instance, in a specific embodiment, and in accordance with some aspects of the present application as will be described later, the anomaly detection model may process the training dataset to encode the training dataset using a single mapping such that normal examples are mapped as close as possible to a single centroid whilst anomalous examples are mapped as far from the centroid as possible.

In step 150, a hypersphere is determined, based on the encoded training dataset comprising the encoded normal data and the encoded anomalous data, defining a threshold to distinguish the encoded normal data from the encoded anomalous data.

Accordingly, in aspects of the present application, based on the encoded normal data and the encoded anomalous data, given that the type of each data as being either normal or anomalous is known, it is possible to train the anomaly detection model by applying various mathematical, analytical and/or computational methods to determine an abstract hypersphere within the context of the encoded normal and anomalous data which is suitable for acting as a threshold to distinguishing the encoded normal data from the anomalous data. For instance, the surface of the hypersphere may define the threshold.

Hence, with the determination of this hypersphere, the anomaly detection model may be considered trained such that when used on unknown target data - as will be outlined further below - the `location' of the encoded target data in the representation space with respect to the threshold, i.e. a comparison between the encoded target data and the hypersphere, may be used to determine whether the target data represents normal data or anomalous data.

For example, the hypersphere may be determined by finding a hypersphere that contains the maximum number of encoded normal data points and which includes the minimum number of encoded anomalous data points. Hence the hypersphere determined in this manner may be used on encoded target data to determine whether the target data represents normal data or anomalous data.

According to a specific embodiment, the encoding the training data comprises applying a mapping function to obtain a multidimensional representation of the training dataset in a multidimensional representation space, the mapping function converting the normal data into the encoded normal data within the multidimensional representation space and converting the anomalous data into the encoded anomalous data in the multidimensional representation space. Further, in a specific embodiment, determining the hypersphere comprises the hypersphere being defined in the multidimensional representation space to contain a predetermined amount - and preferably all - of the encoded normal data, and wherein the threshold is the radius of the hypersphere.

Hence the hypersphere determined in this manner may be used on encoded target data to determine whether the target data represents normal data or anomalous data, and the specific location of the encoded target data may be compared to the radius of the hypersphere in any particular direction, for instance in a vector direction of the multidimensional representation space, and in this manner the hypersphere may be used to determine whether the target data represents normal data or anomalous data.

According to a specific embodiment, the training of the anomaly detection model as outlined in any appropriate manner above with reference to **Figure 1** may further additionally include adjusting the mapping function until the multidimensional representation is such that: the radius of the hypersphere, defined in the multidimensional representation space to contain at least a predetermined amount - and preferably all - of the encoded normal data, is minimized, and/or the average distance of the encoded anomalous data from the centre of the hypersphere is maximised.

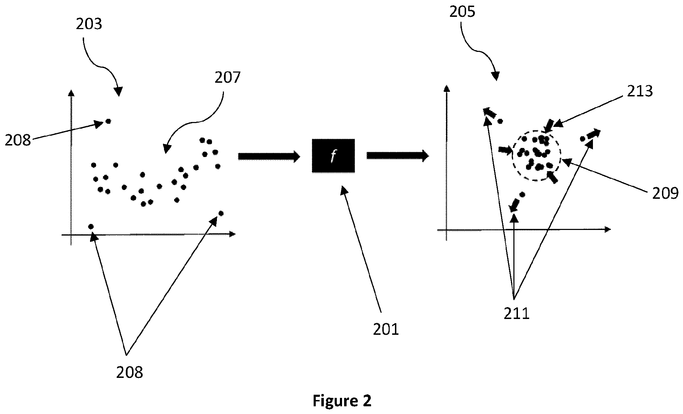

For instance, **Figure 2** shows an example visual representation of a specific embodiment of the action of the mapping function 201 in transforming the training dataset in the training dataset representation space 203 into an encoded dataset in the multidimension representation space 205. In particular, the mapping function 201 converts the normal data 207 in the training dataset representation space 203 into encoded normal data and converts the anomalous data 208 in the training dataset representation space 203 into encoded anomalous data in the multi dimension representation space 205. In doing this, as previously outlined, the encoded normal data is shown within the hypersphere 209 as the hypersphere is defined in the multidimensional representation space 205 to contain at least a predetermined amount, where in the specific embodiment shown in Figure 2 this is all of the encoded normal data. The encoded anomalous data is shown outside the hypersphere 209. Further, as shown in **Figure 2****,** in the specific embodiment, the training of the anomaly detection model includes adjusting the mapping function 201 such that the radius of the hypersphere 209 containing all the encoded normal data is minimized - this process is visually represented by arrows 211. Further, the training of the anomaly detection model additionally or alternatively includes adjusting the mapping function 201 such that the average distance of the encoded anomalous data from the centre of the hypersphere 209 is maximised - this process is visually represented by the arrows 213.

Hence, with the adjusting of the mapping function 201 and the determination of the hypersphere 209 in accordance with the specific embodiment, the anomaly detection model may be considered trained. The anomaly detection model trained in accordance with this specific embodiment using outlier exposure may advantageously provide a particularly high level of accuracy of subsequent anomaly detection on target datasets. Further still, the anomaly detection model trained in accordance with this specific embodiment is particularly well suited to accurate, fast and efficient detection of anomalies in the wide variety of data associated with the behaviour of land, sea, air and/or space domain assets in the context of ISR data. In particular, the anomaly detection model trained in accordance with this specific embodiment may show an advantageously high level of generalized accuracy, able to accurately detect anomalies of so called `unknown unknown' varieties outside the distribution of the training dataset.

In any aspect as previously described, the mapping function may be a linear mapping function and may be embodied as or implemented by a machine learning model such as a neural network. When the mapping function is a neural network, the adjusting of the mapping function in manners as previously outlined comprises adjusting at least one network weight of the neural network, and for instance may be adjusted using standard techniques involving classification loss learning, such as a cross-entropy loss function.

In any of the aspects as outlined above, the determining of the threshold, and thereby the determining of the hypersphere, may be performed by a classifier machine learning model. In particular, the classifier machine learning model may be trained based on the encoded normal data and the encoded anomalous data to distinguish between the encoded normal data and the encoded anomalous data. Accordingly, aspects of the present application may advantageously provide an even further increase in accuracy in the determination of the threshold, and thereby an improved accuracy in training the anomaly detection model.

In a specific embodiment, in addition to any aspect previously described, before encoding the training dataset using the anomaly detection model, the training dataset is first processed by a foundation model neural network which performs embedding of the training dataset into a second multidimensional representation space, such as a vector space, to create an embedded training dataset, such that the normal data before encoding is embedded normal data and the anomalous data before encoding is embedded anomalous data. Further, the foundation model neural network is trained using datasets from the at least one land, sea, air and/or space domain, and wherein the embedding is optionally configured to capture relationships in the training dataset.

In particular, according to aspects of the present application, the additional use of a foundation model before inputting into the anomaly detection model can be considered particularly advantageous, especially in the context of data such as ISR data wherein there are very few examples of anomalous behaviour from which to learn. A particular advantage of foundation models in this context is that they enable few-shot learning, wherein the anomaly detection model can subsequently take advantage of the broad domain knowledge inherent in the foundation models having been trained on very large volumes of background data, particularly for applications such as ISR data having small amounts of anomalous data specific to that context.

In particular, the use of a foundation model to first create an embedding of the training data which thereby captures (at least broad, or high-level) relationships within the normal data and anomalous data of training dataset allows for the anomaly detection model to process data which has already been coarsely understood in some broader regard, for instance the foundation model may create an embedding in the second multidimensional representation space such as a vector space to keep data which is alike in some way or metric close together in a particular dimension of that vector space.

In this manner the processing burden of training the anomaly detection model is reduced, and thereby the efficiency is increased, as the anomaly detection model does not have to be trained from unprocessed or raw training data, as some of the work of processing and understanding relationships between the normal and anomalous aspects of the training data has already been done for it by the foundation model. For the same reason, the accuracy of the training of the anomaly detection model is also increased. In other words, it may be considered that the foundation model is leveraged to perform a broad level of learning and processing of the training data beforehand, and thereby subsequently allowing the anomaly detection model to perform a more precise and fine-tuned level of learning during the training.

As outlined above, according to aspects of the present application the foundation model will also have been trained on appropriate data from at least one of the land, sea, air and/or space domains, and for instance in relation to assets in each of these domains. The datasets used to train the foundation model include data relating to behaviour of assets as well as data unrelated to behaviour of assets. Further, in accordance with specific embodiments, the foundation models may be trained using large volumes of data, for instance from the domain or with respect to the asset of interest. For example, in the sea domain and with respect to movements of sea vessels, the training data may be a large number of examples of vessel movements, over a large area, over a long time period.

As previously noted, the data provided in these domains, and for instance in ISR data in particular, comes in a large variety of different formats. For instance, by way of specific example the following exemplary instances are mentioned:
- Sea or Land domains: tables of observation data, where for instance each row may contain the time, position, velocity, type and other characteristics of the assets of interest.
- Anti-Submarine Warfare: acoustic data, for instance from passive sonar installations and arrays.
- Electronic Warfare: IQ data or spectrograms representing EM information captured by the receiver.
- Radar: IQ or DR data relating to EM information captured by a receiver.

Accordingly, aspects of the present application envisage selecting a different foundation model based on a particular domain and/or asset of interest, and training it on datasets relating to the domain and/or asset of interest.

In particular, a different foundation model and associated training method may be used to train the foundation model depending on the particular relevant format(s) of the data in any particular domain and/or related to any particular assets of interest. For instance, by way of specific representative examples: in the case of ISR track data foundation models and techniques such as those outlined in *'*VIME: Extending the Success of Self- and Semisupervised Learning to Tabular Domain' (Yoon et al., 34th Conference on Neural Information Processing Systems (NeurIPS 2020), Vancouver, Canada.) may be used, or *'*Big Bird: Transformers for Longer Sequences' (Zaheer et al., 34th Conference on Neural Information Processing Systems (NeurIPS 2020), Vancouver, Canada.) which uses transformers to model long sequences. For applications involving audio data, foundation models such as an Audio Masked AutoEncoder may be used ('Masked Autoencoders that Listen', Huang et al., 36th Conference on Neural Information Processing Systems (NeurIPS 2022).). Other suitable foundation models are envisaged.

Regardless of the specific foundation model chosen, the foundation model may be selected to be able to output embedded data in a manner capable of supporting downstream tasks, such as processing by the anomaly detection model as outlined in aspects of the present application.

Accordingly, aspects of the present application as outlined above may provide an improved method of training an anomaly detection model, capable of providing an improved efficiency and accuracy training of an anomaly detection model, for instance one advantageously capable of learning on the datasets having small numbers of known examples of anomalous data, such as ISR data contexts, and ones wherein the types and forms of data and domain and asset of interest come in a wide variety of different forms. Further, the anomaly detection model trained in accordance with aspects of the present application is able to generalize from its limited training data set so that anomalous data of the so called `unknown unknown' format can be detected, which includes new anomalous behaviour unlike anomalous behaviour it was trained on.

Aspects of the present application also concern using an anomaly detection model as trained in any manner as previously described to perform anomaly detection in data associated with the behaviour of land, sea, air and/or space domain assets.

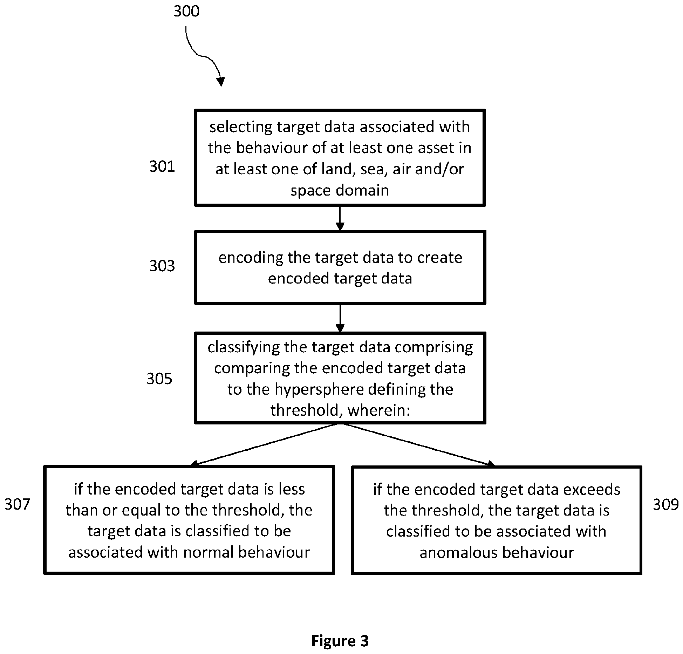

**Figure 3** shows a flow chart of a computer-implemented method 300 of performing, using the anomaly detection model trained in any manner as outlined above, anomaly detection in data associated with the behaviour of land, sea, air and/or space domain assets, according to an aspect of the present application.

In step 301, target data is selected, the target data comprising data associated with the behaviour of at least one asset in at least one of land, sea, air and/or space domain.

The types of data, and the different domains and assets to which the data pertains are the same as previously outlined with reference to the training method, and will not be repeated here. The anomaly detection model having been trained and selected accordingly may be able to accurately detect anomalies in any of the relevant domains and/or assets as appropriate. The target data will represent unseen data, and may similarly come from direct physical sensor data, else may be retrieved from databases of data derived from direct physical sensor readings.

In step 303, the target data is encoded using the anomaly detection model to create encoded target data.

In step 305, the target data is classified by comparing the encoded target data to the threshold as defined by the hypersphere.

In step 307, if the encoded target data is less than or equal to the threshold, the target data is determined and classified to be associated with normal behaviour. Alternatively, in step 309, if the encoded target data exceeds the threshold, the target data is determined and classified to be associated with anomalous behaviour.

Accordingly, as outlined above, aspects of the present application may provide an improved anomaly detection model capable of providing improved efficiency and accuracy in determining anomalies in the behaviour of assets in the land, sea, air and/or space domains, and in particular in ISR data contexts where examples of anomalous behaviour are few. Further, the anomaly detection model in accordance with aspects of the present application is capable of accurately identifying anomalous behaviour unlike previous anomalous behaviour it has seen before.

In a specific embodiment, the encoding the target data comprises applying the mapping function as previously described to obtain a multidimensional representation of the target data in the multidimensional representation space, the mapping function converting the target data into the encoded target data within the multidimensional representation space and converting the anomalous data into the encoded anomalous data in the multidimensional representation space. Further the threshold is the radius of the hypersphere defined in the multidimensional representation space.

In a further specific embodiment, the classifying the target data comprises determining a distance of the encoded target data from the centre of the hypersphere and comparing the distance of the encoded target data from the centre of the hypersphere. If the distance is less than or equal to the radius, the target data is determined to be associated with normal behaviour; and if the distance exceeds the radius, the target data is determined to be associated with anomalous behaviour.

According to a specific embodiment, when the training of the anomaly detection as previously described included the use of a foundation model in any manner as previously described, the use of the anomaly detection model to detect anomalies may also include the use of the foundation model previously trained. In particular, in accordance with a specific embodiment, the target dataset is first processed by the foundation model neural network as previously described, such that the normal data input into the mapping function is embedded normal data and the anomalous data input into the mapping function is embedded anomalous data.

Accordingly, with the use of the foundation model as described, increases in accuracy, speed and processing efficiency of the anomaly detection process may be advantageously increased in a similar manner as previously described with the use of the foundation model in the training process.

According to a specific embodiment, when the training of the anomaly detection model includes the use of a classifier as previously described, similarly the use of the anomaly detection model as part of an anomaly detection process may include classifying of the target data using the classifier machine learning model. According to such aspects of the present application, the accuracy of classification of the target data as relating to anomalous or normal behaviour within the particular domain may advantageously increase.

According to aspects of the present application, when performing anomaly detection in data associated with the behaviour of land, sea, air and/or space domain assets using the anomaly detection model as described in any previous manner, the output of the classification of the target data as either normal or anomalous may result in further action(s).

For instance, when the output of the classification is in any manner that a human might be able to perceive - for instance to a display, or as an alert, or as an audio notification - then in some instances the classification of the target data may be able to be determined to be inaccurate by the user. For instance, if the user reviews the data and the associated behaviour of the asset in the particular domain, it may be considered that on review the behaviour is anomalous, and that the classification as normal is incorrect, or vise versa. In such instances, and especially in instances in which the data was corrected to be labelled as anomalous, this data may advantageously be stored and entered into the training dataset to further accurately train the anomaly detection model in any manner as previously outlined. This is particularly advantageous in contexts such as ISR data in which there are relatively few real examples of anomalous behaviour from which to learn. Accordingly, aspects of the present application may advantageously provide the ability to continuously learn from false positives and false negatives, and thereby incrementally train and improve the anomaly detection model and the training thereof.

Further, alternatively or additionally, the output of the classification from the anomaly detection model may trigger some form of alert, for instance in either visual, audible, or any other appropriate format. In such instances the output of the classification of the anomaly detection model may cause a subsequent real-world action to be taken. For example, if the behaviour of a particular asset is determined to be anomalous, a connected system may be automatically instructed to increase the frequency of physical sensor observations of said particular asset, to begin tracking the asset, instruct a communication system to issue a communication, transmit the data to a remote system or database, or to search for further sources of information about said asset. For instance, when the asset is an unmanned aerial vehicle or a ship or boat, the output of the anomaly detection model being the classification of anomalous may cause for instance an alert to be output by a system to a user, and/or may cause a system to automatically to increase the frequency of physical sensor observations of said unmanned aerial vehicle or a ship or boat and/or to begin tracking it in a more dedicated fashion.

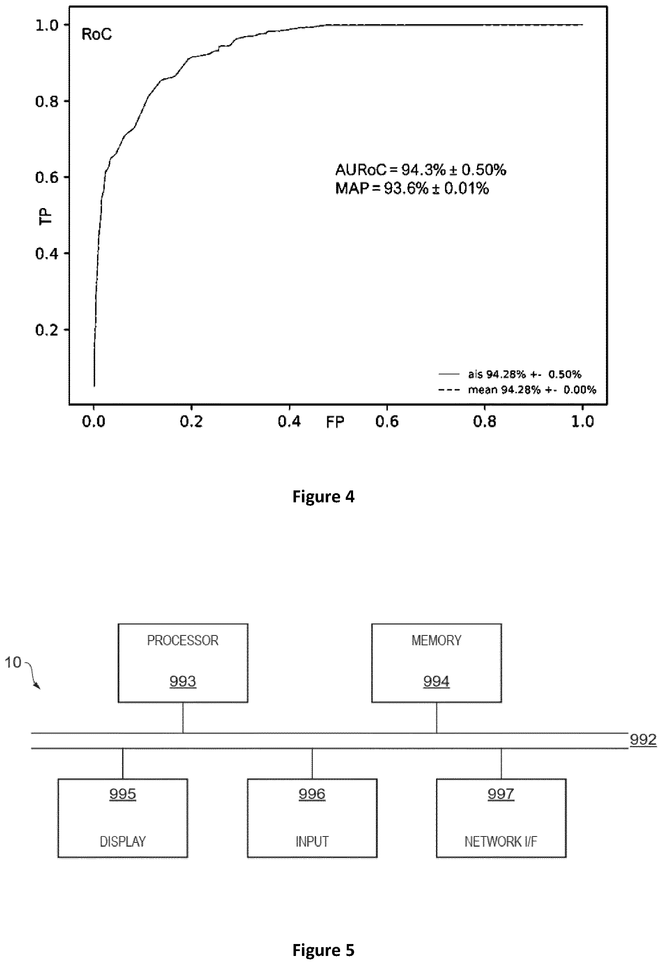

**Figure 4** illustrates a graph demonstrating results of performing anomaly detection using anomaly detection models as described above and as trained by training processes as described herein. In particular, anomaly detection was performed on a publicly available AIS Maritime Track Dataset, including the movements of any ships publishing data to the AIS system in and around the waters of Denmark over a 24 hour period. Hence, with reference to the wording used throughout the present application, the domain may be considered as the sea domain, the assets may be considered as sea vessels, and the behaviour may be considered as anything related to movement. In addition to this data, a small number of synthetic datapoints were created representing anomalous data associated with movement behaviour considered anomalous.

With this data, performing anomaly detection using anomaly detection models as described above and as trained by training processes as described herein, a receiver operating characteristic curve (RoC) graph showing performance of classification at varying threshold values was obtained. True positive rate (TP) is on the y-axis and false positive rate (FP) are on the x-axis. As can be seen, the anomaly detection process achieved strong classification accuracy results, with:
- Area under RoC (AURoC) = 94.3% ± 0.50%
- Mean Average Precision = 93.6% ± 0.01%

Hence according to certain implementations of the present application, there are provided anomaly detection models, and training methods therefor, capable of increased performance in accurately providing anomaly detection in data associated with the behaviour of land, sea, air and/or space domain assets, and in particular in the context of ISR data applications.

Hence according to certain implementations of the present application, there are provided anomaly detection models, and training methods therefor, capable of accurately providing anomaly detection in data associated with the behaviour of land, sea, air and/or space domain assets despite having only been able to learn on small numbers of examples of anomalous data. Accordingly, aspects of the present application are particular suited to ISR data applications.

Further, according to certain implementations of the present application, there are provided anomaly detection models, and training methods therefor, capable of generalized learning and identification of anomalous behaviour, unrelated to those examples seen during the training process, so called `unknown unknowns'. Accordingly, aspects of the present application are particular suited to ISR data applications, wherein anomalous behaviour, for instance threats, is always changing and often takes new forms.

Further, according to certain implementations of the present application, there are provided anomaly detection models, and training methods therefor, capable of application to a wide variety of different types of data. Accordingly, aspects of the present application are particular suited to ISR data applications, where data formats are widely varied, and the domains and assets of interest are diverse.

With reference to the anomaly detection model as described in any previous aspect or embodiment above, the present application envisages any suitable machine learning model, for instance the anomaly detection model may be a neural network. These will not be described further here. Further, the training is envisaged in any appropriate manner and also will not be described in detail here. For instance, the training of the anomaly detection model may accordingly comprise adjusting at least one network weight of the model accordingly based on the or any output of the anomaly detection model. For instance, the adjusting may be using standard techniques involving classification loss learning, such as a cross-entropy loss function. Other appropriate machine learning models and training methods are accordingly envisaged.

For the purposes of the present disclosure, the term "machine learning model" encompasses within its scope the following concepts:
- machine learning algorithms, comprising processes or instructions through which data may be used in a training process to generate a model artefact for performing a given task, or for representing a real-world process or system;
- the model artefact that is created by such a training process, and which comprises the computational architecture that performs the task; and
- the process performed by the model artefact in order to complete the task.
   References to "machine learning model", "model", model parameters", "model information", etc., may thus be understood as relating to any one or more of the above concepts encompassed within the scope of "Machine learning model".

### Example Computer System Implementation

**Figure 5** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 5****.** Such a computing device need not have every component illustrated in **Figure 5****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

### Alternative Embodiments

The embodiments described above are illustrative of, rather than limiting to, the present invention. Alternative embodiments apparent on reading the above description may nevertheless fall within the scope of the invention.

## Claims

1. A computer-implemented method of training an anomaly detection model for detecting anomalies in data associated with the behaviour of land, sea, air and/or space domain assets, comprising:
selecting a training dataset for training the anomaly detection model by outlier exposure, the training dataset comprising data associated with the behaviour of assets in at least one of land, sea, air and/or space domain, the training dataset comprising normal data associated with normal behaviour and anomalous data associated with anomalous behaviour;
encoding the training dataset within the anomaly detection model to create an encoded training dataset comprising encoded normal data and encoded anomalous data;
determining, based on the encoded training dataset, a hypersphere defining a threshold to distinguish the encoded normal data from the encoded anomalous data.

2. A computer-implemented method according to claim 1, wherein:
the encoding the training dataset comprises:
applying a mapping function to obtain a multidimensional representation of the training dataset in a multidimensional representation space, the mapping function converting the normal data into the encoded normal data within the multidimensional representation space and converting the anomalous data into the encoded anomalous data in the multidimensional representation space; and
determining the hypersphere comprises determining a hypersphere defined in the multidimensional representation space that contains at least a predetermined amount, and preferably all, of the encoded normal data, and wherein the threshold is a radius of the hypersphere.

3. A computer-implemented method according to claim 2, further comprising:
adjusting the mapping function until the multidimensional representation is such that:
the radius of the hypersphere, defined in the multidimensional representation space to contain the at least a predetermined amount, and preferably all, all of the encoded normal data, is minimised; and/or
an average distance of the encoded anomalous data from the centre of the hypersphere is maximised.

4. A computer-implemented method according to claim 3, wherein the mapping function is or is implemented by a neural network, and the adjusting of the mapping function comprises adjusting at least one network weight of the neural network.

5. A computer-implemented method according to any preceding claim, wherein before encoding the training dataset, the training dataset is first processed by a foundation model neural network which performs embedding of the training dataset in a second multidimensional representation space to create an embedded training dataset, such that the normal data before encoding is embedded normal data and the anomalous data before encoding is embedded anomalous data; and
wherein the foundation model neural network is trained using datasets from the at least one land, sea, air and/or space domain, and wherein the embedding is preferably configured to capture relationships in the training dataset.

6. A computer-implemented method of performing, using the anomaly detection model trained in accordance with any preceding claim, anomaly detection in data associated with the behaviour of land, sea, air and/or space domain assets, comprising:
selecting target data comprising data associated with the behaviour of at least one asset in at least one of land, sea, air and/or space domain;
encoding the target data using the anomaly detection model to create encoded target data;
classifying the target data, comprising comparing the encoded target data to the hypersphere defining the threshold, wherein:
if the encoded target data is less than or equal to the threshold, the target data is determined to be associated with normal behaviour; and
if the encoded target data exceeds the threshold, the target data is determined to be associated with anomalous behaviour.

7. A computer-implemented method according to claim 6 when dependent on claim 2 or 3, wherein:
the encoding the target dataset comprises:
applying the mapping function to obtain a multidimensional representation of the target data in the multidimensional representation space, the mapping function converting the target data into the encoded target data within the multidimensional representation space and converting the anomalous data into the encoded anomalous data in the multidimensional representation space; and
the threshold is the radius of the hypersphere defined in the multidimensional representation space.

8. A computer-implemented method according to claim 7 when dependent on claim 3, wherein the classifying the target data comprises:
determining a distance of the encoded target data from the centre of the hypersphere;
comparing the distance of the encoded target data from the centre of the hypersphere, wherein:
if the distance is less than or equal to the radius, the target data is determined to be associated with normal behaviour; and
if the distance exceeds the radius, the target data is determined to be associated with anomalous behaviour.

9. A computer-implemented method according to any one of claims 6 to 8, wherein before encoding the training dataset using the anomaly detection model, the target dataset is first processed by the foundation model neural network as defined in previous claim 5, such that the normal data input into the mapping function is embedded normal data and the anomalous data input into the mapping function is embedded anomalous data.

10. A computer-implemented method according to any preceding claim, wherein the target data is derived from sensor data received from physical sensors.

11. A computer-implemented method according to any preceding claim, wherein at least some of the training dataset is synthetic, and in particular wherein at least some of the anomalous data is synthetic.

12. A computer-implemented method according to any preceding claim, wherein the data associated with the behaviour of land, sea, air and/or space domain assets is intelligence, surveillance and reconnaissance (ISR) data, and optionally wherein the assets are military assets.

13. A computer-implemented method according to any preceding claim, wherein the training dataset for training the anomaly detection model by outlier exposure comprises a relatively small amount of anomalous data as compared to normal data.

14. A computer readable medium having stored thereon computer executable instructions to cause a computer system to perform the method of any preceding claim.

15. An information processing apparatus comprising a memory and a processor connected to the memory, wherein the processor is configured to perform a method in accordance with any one of claims 1 to 13.
